(19) Europäisches Patentamt
European Patent Office
Office européen des brevets

(11) Veröffentlichungsnummer: **0 233 336 B1**

# (12) EUROPÄISCHE PATENTSCHRIFT

(45) Veröffentlichungstag der Patentschrift: **03.11.93**

(51) Int. Cl.$^5$: **C08B 31/12**

(21) Anmeldenummer: **86116805.2**

(22) Anmeldetag: **03.12.86**

Die Akte enthält technische Angaben, die nach dem Eingang der Anmeldung eingereicht wurden und die nicht in dieser Patentschrift enthalten sind.

## (54) Verfahren zur Verätherung von Stärke.

(30) Priorität: **15.02.86 DE 3604796**

(43) Veröffentlichungstag der Anmeldung:
**26.08.87 Patentblatt 87/35**

(45) Bekanntmachung des Hinweises auf die Patenterteilung:
**03.11.93 Patentblatt 93/44**

(84) Benannte Vertragsstaaten:
**AT BE DE ES FR GB IT NL SE**

(56) Entgegenhaltungen:
**EP-A- 0 031 447**
**US-A- 4 127 563**
**US-A- 4 281 109**

**Patents Abstracts of Japan, Band 5, Nr.94, (C-59)(766), 19.Juni 1981, &JP-A-5636501**

**Chemicals Abstracts, Band 93, Nr.18, 03.11.1980, Seite 281, Zusammenfassung 172598n, Columbus, Ohio,US; M.S.AY.Bhatty et al.:"Interaction of alkalies withydrating and hydrated calcium silicates"**

**J.Soc.Cosmetic Chemists 16(1965) 251-260.**

(73) Patentinhaber: **Degussa Aktiengesellschaft**
**Weissfrauenstrasse 9**
**D-60311 Frankturt(DE)**

(72) Erfinder: **Stober, Reinhard, Dr.**
**Bornwiesenweg 22**
**D-6467 Hasselroth 2(DE)**
Erfinder: **Fischer, Wolfgang**
**Hanauer Landstrasse 20**
**D-8756 Kahl(DE)**
Erfinder: **Huss, Michael**
**Richard-Wagner-Strasse 18a**
**D-6236 Eschborn(DE)**
Erfinder: **Udluft, Klaus, Dr.**
**Clemens-Brentano-Strasse 17**
**D-6500 Mainz 42(DE)**

EP 0 233 336 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Handbuch der Stärke, Band 5, Paul Parey (Berlin)1973, Seiten 54-57.

Ullmans Encyclopädie der technischen Chemie,Band 21, Verlag Chemie, 1982,Seite466.

Chemische Tecnologie, Band 3, Carl Hanser Verlag, 1983, Seiten 87 und 89.

Ullman's Encyclopedia of industrial Chemistry, 5 th Ed vol A 11, Seiten 474 and 489.

Chemistry of Pigments and Fillers by D.G.Hawthorne, John Wiley & Sons, 1983, Seiten 44 and 45.

Chemical Abstracts, vol. 90, no 22, 28 May 1979, p. 318, abstract-no. 173538t

Chemical Abstracts, vol. 78, no 24, 18 June 1973, p. 176, abstract-no. 150545f

## Beschreibung

Die Erfindung betrifft ein Trockenverfahren zur Herstellung von verätherten Stärken durch Umsetzung von Stärke mit Alkylidenepoxiden in Gegenwart von Wasser in alkalischem Medium.
Es ist bekannt, Stärke oder Stärke enthaltende Substanzen in sogenannten Trockenverfahren mit kationischen Verätherungsmitteln umzusetzen. Bei diesen Verfahren führt man die Reaktion nicht in einer wässrigen Suspension, sondern mit pulverförmiger Stärke durch.

Gemäß US-PS 4 127 563 setzt man für die Kationisierung Alkylidenhalohydrine bei einem pH-Wert von ≦ 9 und einer Temperatur von 25 bis 60° C ein.

Die Umsetzung eines Halohydrins mit Stärke in alkalischem Medium, aber bei einer Temperatur, die wenigstens 30° C unter der Gelier-Temperatur der Stärke liegt, wird in der US-PS 3 346 563 beansprucht.

Aus der EP-PS 31 477 ist ebenfalls ein Verfahren zur Umsetzung von Stärke mit Alkylidenepoxiden bekannt, die in Gegenwart von Wasser, Calciumhydroxid oder Calciumoxid bei Temperaturen von 50 bis 120° C durchgeführt wird.

Der DE-OS 29 35 338 kann man ein Verfahren zur Kationisierung von Stärke entnehmen, bei dem der Alkaliüberschuß jedoch neutralisiert werden muß.

Gemäß US-PS 4,281,109 empfiehlt es sich, das Verätherungsreagenz und das Alkali- oder Erdalkalihydroxid vorzumischen und erst dann mit der Stärke zu vermengen.
Durch dieses Vorgehen soll eine gleichmäßigere und schnellere Durchmischung der Reagentien erreicht werden, so daß z. B. lokale Alkalianreicherungen nicht auftreten, die zum Quellen der Stärke führen können.
Allen aufgeführten Verfahren ist gemeinsam, daß bis zum Abschluß der Verätherungsreaktion das Reaktionsgemisch gemischt werden muß.
Mit abnehmender Temperatur dauert natürlich die Reaktion länger. Entsprechend lange sind Reaktionsbehälter blockiert und ist Rührenergie aufzuwenden. Zusätzlich muß man Ausbeuteverluste hinnehmen.
In dem J. Soc. Cosmetic Chemists 16, 251-260 (1965) und dem Handbuch der Stärke, Verlag Paul Parey, Berlin, (1973), Seite 57, wird beschrieben, daß man die Rieselfähigkeit von Stärken mit verschiedenen Wassergehalten durch den Zusatz von feinteiligen Kieselsäuren verbessern kann.
Ein Hinweis auf die Umsetzung von Stärke mit Epoxiden ist diesen Veröffentlichungen jedoch nicht zu entnehmen.
Aufgabe der Erfindung ist ein Verfahren zur Herstellung von kationischen Stärkeäthern, bei dem trotz niedriger Reaktionstemperaturen gleichzeitig nur sehr wenig Rührenergie aufzuwenden ist, Reaktionsgefäße nur kurzzeitig blockiert und sehr gute Ausbeuten erzielt werden, sowie ein Absieben nicht nötig ist.

Gegenstand der Erfindung ist ein Verfahren zur Herstellung verätherter Stärken mit einem Substitutionsgrad (DS) von 0,005 bis 0,300 durch Umsetzung mit Alkylidenepoxiden der allgemeinen Formeln

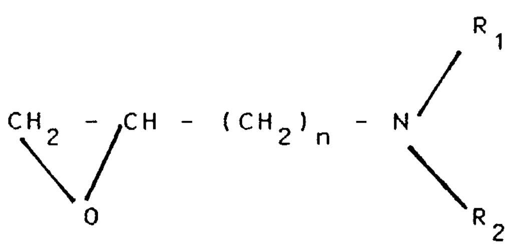

(I)

oder

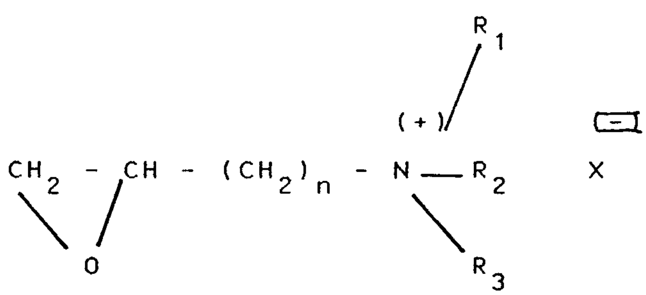

(II)

in denen n = 1 , 2 oder 3 bedeutet, $R_2$ und $R_3$ gleiche oder verschiedene Alkylreste mit 1 bis 4 Kohlenstoffatomen, $R_1$ einen Alkylrest mit 1 bis 4 Kohlenstoffatomen, oder den Benzylrest darstellen, und X $^{(-)}$ Chlorid, Bromid, Sulfat oder Acetat entspricht, in Gegenwart von 0,2 bis 2,0 Gew.-% eines Alkali- oder Erdalkalihydroxid oder Erdalkalioxids und 10 bis 35 Gew-% Wasser, (jeweils bezogen auf die Stärke (atro), wobei je Mol Stärke, berechnet als Anhydroglukoseeinheit in der Trockensubstanz, 0,005 bis 0,5 Mol der Epoxide gemäß den Formeln (I) oder (II) eingesetzt werden, das dadurch gekennzeichnet ist, daß man die Umsetzung bei 5 bis 40 ° C in Gegenwart eines pulverförmigen Gemischs bestehend aus Kieselsäure und Calciumhydroxid oder -oxid (Aktivator durchführt, das zu 10 bis 50 Gew.-% aus einer feinteiligen Kieselsäure besteht. Erfindungsgemäß geht man dabei so daß man das Gemisch aus Stärke, Alkali- oder Erdalkalihydroxid bzw. -oxid, Kieselsäure und Alkylidenepoxid, das im allgemeinen als wässrige Lösung eingesetzt wird, in einem Intensivmischer innerhalb von 10 Sekunden bis 25 Minuten, bevorzugt 20 Sekunden bis 5 Minuten homogenisiert, dann ausschleust und in dem vorgesehenen Lagerbehältnis wie z.B. einem Silo oder auch in den für den Versand vorgesehenen Verpackungen die Kationisierungsreaktion bis zum Ende ablaufen läßt.

Weitere Mischenergien müssen dann nicht mehr für weitere Verfahrensschritte aufgewendet werden.

Zusätzlich erweist es sich als vorteilhaft, daß man bevorzugt in einem Temperaturbereich arbeitet, in dem sich in Abhängigkeit von z.B. jahreszeitlich bedingten Schwankungen der Umgebungstemperatur die Raumtemperatur von anspruchslosen Warenlagern bewegt, d.h. von 18 bis 30 ° C, insbesondere 20 bis 25 ° C.

Versuche zeigen, daß das eingesetzte Epoxid vollständig abreagiert. Bei einer Temperatur von 20 ° C sind nach 7 Tagen nur noch Spuren von < 10 ppm Epoxid/kg Stärke festzustellen.

Nach dem erfindungsgemäßen Verfahren hergestellte Stärken besitzen keinen Grobanteil und können ohne Nachbehandlung (Absieben) eingesetzt werden.

Als Intensivmischer geeignet sind z.B. Pflugscharmischer (kontinuierlich und diskontinuierlich), Befeuchtungs-Durchflußmischer (kontinuierlich).

Zur Herstellung kationischer Stärkeäther nach dem erfindungsgemäßen Verfahren können native oder modifizierte Stärke oder Stärke enthaltende Substanzen beliebiger Herkunft eingesetzt werden. Mit besonderem Vorteil wird native Weizen-, Mais-, Tapioca- oder Kartoffelstärke verwendet.

Die Viskosität von Stärkekleistern wird wesentlich erhöht, wenn die Umsetzung mit den oben genannten Epoxiden in Gegenwart von 0,5 bis 5 Gew.-% einer Verbindung erfolgt, die einer der folgenden Formeln entspricht:

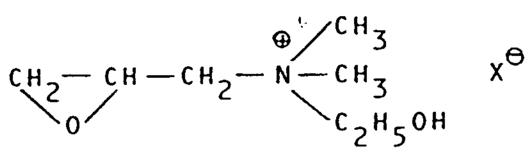

(III)

oder

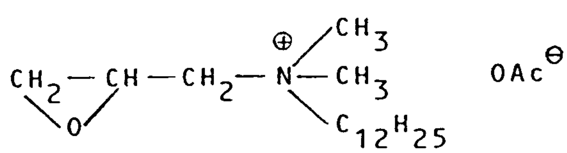

(IV)

oder

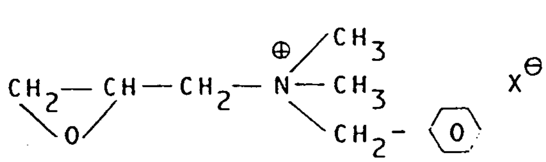

(V)

Diese Verbindungen werden vorzugsweise im Gemisch mit den Epoxiden gemäß den Formeln (I) oder (II) eingesetzt und können darin auch in Form der zugehörigen Epichlorhydrine vorliegen, Epoxide gemäß (V) jedoch nur, wenn nicht schon Epoixde gemäß (II) mit n = 1 und R = Benzyl eingesetzt werden.

Spätestens im Reaktionsmedium erfolgt dann die Umwandlung zu den Epoxiden entsprechend den Formeln (III) bis (V) , die mit der Stärke reagieren. Gemische dieser Art stellt man vorteilhaft her, indem man bei der Herstellung der Epoxide mit den Formeln (I) und (II), wie sie analog für Glycidyltrimehtylammoniumchlorid in der DE-A-2902755 beschrieben wird, die zur Bildung der erfindungsgemäß vorgeschriebenen Anteile der Epoxide mit den Formeln (III) bis (V) notwendigen Mengen der entsprechenden tertiären Amine einsetzt. Man kann diese Epoxide bzw. Chlorhydrine aber auch getrennt herstellen und mit den Epoxiden gemäß den Formeln (I) oder (II) im vorgeschriebenen Verhältnis vermischen.

Man setzt je Mol Stärke, berechnet als Anhydroglukoseeinheit in der Trockensubstanz, 0,005 bis 0,500 Mol Epoxid gemäß den Formen (I) oder (II) , vorzugsweise 0,01 bis 0,25 Mol Epoxid, ein. Daraus resultiert ein Substitutionsgrad (DS) von 0,005 bis 0,300, bevorzugt von 0,01 bis 0,20.

Erfindungsgemäß wird die Verätherung der Stärke mit den Alkylidenepoxiden in einem Medium vorgenommen, das 10 bis 35 Gew.-%, insbesondere 20 bis 25 Gew.-%, Wasser und 0,2 bis 2,0 Gew.-%, insbesondere 0,4 bis 1,5 Gew.-%, eines Alkali- oder Erdalkalihydroxids bzw. -oxids, insbesondere Calciumoxid oder Calciumhydroxid enthält.

Neben diesen an sich bekannten Komponenten müssen 0,02 bis 2,0 Gew.-%, bevorzugt 0,2 bis 1.0 Gew.-%, einer feinteiligen Kieselsäure in dem Reaktionsgemisch vorhanden sein, bezogen auf dessen Gesamtmenge.

Dabei kann es sich um gefällte oder durch Flammenhydrolyse erzeugte Kieselsäuren handeln, hydrophil oder hydrophob.

Die spezifischen Oberflächen liegen zwischen 60 und 700 $m^2/g$, bevorzugt 100 und 450 $m^2/g$ (BET-Messung nach DIN 66 131, $N_2$-Adsorption bei der Temperatur des flüssigen Stickstoffs, vorheriges Ausheizen der Probe bei 110 °C).

Bevorzugt eingesetzt werden hydrophile gefällte Kieselsäuren mit einer spezifischen Oberfläche von 190 bis 450 $m^2/g$, insbesondere eine sprühgetrocknete gefällte Kieselsäure mit einer spezifischen Oberfläche von 190 $m^2$/(BET-Messung).

Man verwendet auch Gemische aus hydrophoben und hydrophilen Kieselsäuren.

Man setzt vorzugsweise ein pulverförmiges Gemisch aus Kieselsäure und dem alkalisch wirkenden Oxid oder Hydroxid, besonders Calciumhydroxid oder Calciumoxid, ein (im folgenden Text Aktivator genannt).

Der Aktivator enthält 10 bis 50 Gew.-%, bevorzugt bis 40 Gew.-%, Kieselsäure. Die Differenz zu 100 % wird durch Calciumoxid bzw. Calciumhydroxid aufgefüllt.

Dabei ist jedoch zu berücksichtigen, daß der Aktivator als Pulver vorliegen muß und jeweils die Menge an Aktivator eingesetzt wird, die am Endprodukt einen pH-Wert ≧ 9 (5 Gew.%ige Stärkesuspension) zeigt.

Bei der Vermischung der Reagentien. hat sich jedoch als vorteilhaft herausgestellt, (Chargenmischer) zuerst Stärke und Aktivator miteinander bis zu 10 Minuten zu mischen und anschließend das Epoxid in Form einer wässrigen Lösung aufzusprühen.

Das bei der Herstellung des Epoxids durch Umsetzung des entsprechenden Halogenhydrins mit alkalisch wirkenden Substanzen, wie z. B. Alkalihydroxid, anfallende Gemisch kann unmittelbar verwendet werden, wenn das dabei entstehende Alkalihalogenid im Endprodukt nicht stört (Korrosionsgefahr). Dieses wird weder gewaschen noch neutralisiert und kann direkt eingesetzt werden.

Es kann natürlich auch die nach dem Stand der Technik übliche Neutralisation und ein Auswaschen des Erdalkali- bzw. Alkalianteils in der kationisierten Stärke erfolgen, wenn dies unter Berücksichtigung des Einsatzzweckes der Stärke sinnvoll zu sein scheint.

Mit Hilfe des erfindungsgemäßen Verfahrens kann man auch hochsubstitut ierte kaltwasserlösliche Stärken mit einem Substitutionsgrad von 0,08 bis 0,30 herstellen.

Arbeitet man bei der vorhandenen Raum- bzw. Umgebungstemperatur, benötigt man weder für die Mischvorrichtung noch für die sich anschließende Abreaktion eine Temperaturregelung und erhält trotzdem die gewünschten Produkte mit hohen Ausbeuten.

Es sind dann sogar zusätzliche Reaktionsbehälter überflüssig, da das Reaktionsgemisch nach der intensiven Durchmischung z. B. in die für den Versand vorgesehenen Verpackungen oder in ein Lagersilo abgefüllt werden kann und dort abreagiert.

Die geringe Verweilzeit im Mischaggregat ermöglicht erstmalig gleichzeitig die kontinuierliche Durchführung der Trockenkationisierung, während nach dem Stand der Technik aufgrund der langen Mischzeiten nur die absatzweise Kationisierung von Stärke bekannt und sinnvoll war.

Es ist zudem erfindungsgemäß zum ersten Mal möglich, durch Verwendung verschiedener Aktivatortypen die Viskosität der entsprechenden Stärkelösungen zu varrieren und gleichzeitig den Substitutionsgrad (DS) der Stärke konstant zu halten.

Die erfindungsgemäß herstellbaren kationisierten Stärken eignen sich zur Anwendung z. B. als Retentionshilfsmittel, als Zusatzmittel zur Masse bei der Papierherstellung zur Verbesserung der Papierfestigkeit, an der Leimpresse bei der Papierherstellung, als Verdickungsmittel, als Flockungsmittel für die Abwasserbehandlung und bei der Herstellung von Gips.

Die nachfolgenden Beispiele illustrieren den Gegenstand der Erfindung.

Es werden folgende Aktivator-Typen für die Kationisierung von Stärken durch intensives Vermischen hergestellt:

| Type | Zusammensetzung (Gew.-%) | Schüttdichte ($g/cm^3$) |
|---|---|---|
| PC-1 | 58 % Calciumhydroxid, ca. 97 %ig<br>42 % KS (sprühgetrocknete Kieselsäure) (190 $m^2/g$) | 0,21 |
| PC-2 | 66 % Calciumhydroxid, ca. 97 %ig<br>34 % KS | 0,22 |
| PC-3 | 52 % Calciumhydroxid, ca. 97 %ig<br>48 % KS | 0,18 |
| PC-4 | 75 % Calciumhydroxid, ca. 97 %ig<br>25 % KS | 0,25 |
| PC-5 | 82 % Calciumhydroxid, ca. 97 %ig<br>18 % KS | 0,27 |

Beispiele

In den Beispielen 1 bis 3 enthält die Reagenzlösung jeweils 0,5 Gew.-% 3-Chlor-2-hydroxipropyldimethyläthanolammoniumchlorid bez. auf 2,3-Epoxipropyltrimethylammoniumchlorid. Die Analysewerte beziehen sich auf ausgewaschene Proben (Isopropanol/Wasser 80/20 Gew.%).

Beispiel 1

50 kg (0,2482 kMol) native Kartoffelstärke (Wassergehalt 19,5 % ; Gehalt an unlöslichem Stickstoff 0,008 %) werden in einen Mischer eingebracht. Nach der Zugabe von 6,44 kg Aktivator PC-2 wird 5 Minuten gemischt und innerhalb 5 Minuten 5,137 kg Reagenzlösung, welche 1,054 kg 2,3-Epoxipropyltrimethylammoniumchlorid enthält, über eine Düse bei laufendem Mischer zudosiert. Es wird weitere 10 Minuten gemischt und in ein Vorratssilo eingefüllt. Nach einer Standzeit von 24 Stunden bei 20 °C wurde eine Ausbeute von 92,8 % analysiert. Den Substitutionsgrad des gewonnenen kationischen Stärkeäthers war 0,026. Der Stärkegehalt lag bei 74 %. Die Viskosität eines 3 Gew.-%igen Stärkekleisters lag bei 1450 mPas (gemessen am Brookfield-Viskosimeter bei 20 ° C und 100 UpM)

Beispiel 2

50 kg (0,2482 kMol) native Kartoffelstärke (Wassergehalt 19,5 %, Gehalt an unlöslichem Stickstoff 0,008 %) werden in einen Mischer gegeben. Nach der Zugabe von 1,006 kg Aktivator PC- 5 wird 5 Minuten gemischt. Danach wird innerhalb 5 Minuten 5,137 kg Reagenzlösung mit einem Gehalt von 1,054 kg 2,3-Epoxipropyltrimethylammoniumchlorid über eine Düse bei laufendem Mischer zudosiert und weitere 10 Minuten gemischt. Danach wird in ein Vorratssilo eingefüllt.

Nach einer Standzeit von 16 Stunden bei 20 °C wurde eine Ausbeute von 92,2 % analysiert, was einem Substitutionsgrad von 0,0258 entspricht. Die Viskosität eines 3 Gew.-%igen Stärkekleisters lag bei 56 mPas (gemessen am Brookfield-Viskosimeter bei 20 °C und 100 UpM). Der pH-Wert einer 5 Gew.-%igen Stärkesuspension lag bei 11.8.

Beispiel 3

50 kg (0,2482 kMol) native Kartoffelstärke (Wassergehalt 19,5 %, Gehalt an unlöslichem Stickstoff 0,008 %) werden in einen Mischer gegeben. Nach der Zugabe von 0,403 kg Aktivator PC- 3 wird 5 Minuten gemischt. Danach wird innerhalb 5 Minuten 5,137 kg Reagenzlösung mit einem Gehalt von 1,054 kg 2,3-Epoxypropyltrimethylammoniumchlorid über eine Düse bei laufendem Mischer zudosiert und weitere 10 Minuten gemischt. Danach wird in ein Vorratssilo eingefüllt.
Nach einer Verweilzeit von 3 Tagen bei 20 °C wurde eine Ausbeute von 91,4 % analysiert, was einem Substitutionsgrad von 0,0256 entspricht. Die Viskosität eines 3 Gew.%igen Stärkekleisters lag bei 1800 mPas (gemessen am Brookfield-Viskosimeter bei 20° und 100 UpM). Der pH-Wert einer 5 Gew.-%igen Stärkesuspension lag bei 9,5.

Beispiel 4

50 kg (0,2707 kMol) native Maisstärke (Wassergehalt 12,2 %; Gehalt an unlöslichem Stickstoff 0,035 %) werden im Mischer vorgelegt. Nach der Zugabe von 1,054 kg Aktivator PC-2 wird 5 Minuten gemischt und innerhalb 5 Minuten ein Reaktionsgemisch aus 2,820 kg 3-Chlor-2-hydroxypropyltrimethylammoniumchlorid, 65 %ig; 1 300 kg Natronlauge 30 %ig und 2,893 kg Wasser bei laufendem Mischer eingedüst. Nach einer weiteren Mischzeit von 10 Minuten wird in ein Silo gefüllt, wo nach einer Verweilzeit von 24 Stunden bei 20° C mittels Stickstoff-Analyse ein Substitutionsgrad von 0,0323 ermittelt wurde, was einer Reaktionsausbeute von 89,8 % entspricht.

Beispiel 5

50 kg (0,2677 kMol) native Tapiocastärke (Wassergehalt 13,2 %; Gehalt an unlöslichem Stickstoff 0,004 %) werden in einen Mischer gefüllt. Nach der Zugabe von 1,042 kg Aktivator PC- 2 wird 5 Minuten gemischt. Danach wird innerhalb 5 Minuten ein Gemisch aus 2,483 kg 73,6 %igem 2,3-Epoxipropyltrimethylammoniumchlorid (0,01205 kMol) und 5,384 kg Wasser zudosiert und weitere 10 Minuten gemischt und anschließend in ein Vorratssilo gefüllt.
Nach einer Standzeit von 24 Stunden bei 20° C wurde eine Reaktionsausbeute von 88,8 % bezogen auf eingesetztes 2,3-Epoxipropyltrimethylammoniumchlorid erzielt, was einem Substitutionsgrad von 0,0400 entspricht.

Beispiel 6

50 kg (0,2698 kMol) einer abgebauten Maisstärke (Leimpressenstärke) mit einem Wassergehalt von 12,5 % und einem Gehalt an unlöslichem Grundstickstoff von 0,040 % werden in einem Mischer eingebracht. Nach der Zugabe von 1,050 kg Aktivator PC-2 wird 5 Minuten bei 20° C gemischt. Anschließend werden innerhalb 5 Minuten 1,001 kg 2,3-Epoxypropyltrimethylammoniumchloridlösung, 73,6 %ig (0,00486 kMol) und 5,817 kg Wasser bei laufendem Mischer eingedüst und weitere 10 Minuten gemischt. Nach einer anschließenden Verweilzeit von 24 Stunden bei 20° C in einem Silo wurde eine Reaktionsausbeute von 87,5 % analysiert, was einem Substitutionsgrad von 0,0158 entspricht.

Beispiel 7 (nicht erfindungsgemäß)

In einem kontinuierlichen Durchflußmischer werden 200 kg (1,0805 kMol) native Weizenstärke (Wassergehalt 12,4 %, unlöslicher Stickstoffgehalt 0,023 %); 6678 kg 2,3-Epoxypropyltrimethylammoniumchlorid (73,6 % Wirkstoff = 0,0324 kMol); 20,854 kg Wasser und 3,154 kg Aktivator PC-1 pro Stunde kontinuierlich zudosiert und nach einer mittleren Verweilzeit von 10 bis 60 Sekunden in ein Vorratssilo gefördert.
Die Analyse ergab nach 24 Stunden Verweilzeit bei 20° C einen Stickstoffgehalt von 0,226 %, bezogen auf atro Stärke, ohne unlöslichen Grundstickstoff, was einem DS von 0,0268 und einer Reaktionsausbeute von 89,3 % entspricht.

Beispiel 8

100 kg (0,5208 kMol) native Kartoffelstärke (Wassergehalt 15,55 %, Gehalt an unlöslichem Stickstoff 0,010 %) werden in einen Mischer gegeben. Nach der Zugabe von 1,351 kg Aktivator PC-2 und 0,657 kg Calciumhydroxid, 97 %ig (0,0086 kMol) wird 5 Minuten gemischt und anschließend innerhalb 5 Minuten 15,028 kg 21,5 %ige 3-Chlor-2-hydroxipropyltrimethylammoniumchlorid (0,0172 kMol) bei laufendem Mischer zudosiert. Nach einer weiteren Mischzeit von 10 Minuten wird in ein Silo abgefüllt. Nach einer Verweilzeit von 7 Tagen bei 20° C wird eine Reaktionsausbeute von 92,8 % erreicht, was einem Substitutionsgrad von 0,0309 entspricht.

Beispiel 9

50 kg (0,2482 kMol) native Kartoffelstärke (Wassergehalt 19,5 %, Gehalt an unlöslichem Stickstoff 0,008 %) werden in einen Mischer gegeben. Nach der Zugabe von 0,644 kg Aktivator PC-2 wird 5 Minuten gemischt. Danach werden innerhalb 5 Minuten 13,068 kg 2,3-Epoxypropyltrimethylammoniumchlorid, 70,3 %ig (0,0606 kMol) bei laufendem Mischer zudosiert und weitere 10 Minuten gemischt. Nach einer Verweilzeit von 24 Stunden bei 20° C (Silo) wurde ein Stickstoff-Gehalt von 1,382 % analysiert, was einem Substitutionsgrad von 0,187 entspricht. Die Ausbeute wurde auf 76,6 % berechnet.
Die so erhaltene kationische Stärke ist kaltwasserlöslich.

Beispiel 10

Die erfindungsgemäß hergestellten Stärken besitzen keinen Grobanteil und sind daher ohne Nachbehandlung (Absieben) einsetzbar. Die Kornverteilung ändert sich praktisch nicht. Das bedeutet gleichzeitig, daß die restliche Kationisierungsreaktion nach dem Homogenisieren z.B. auch im Versandbehälter ablaufen kann.

(Reagenz: 2,3-Epoxipropyltrimethylammoniumchlorid
1,0 Gew.-% $Ca(OH)_2$
0,5 Gew.-% Kieselsäure)

| Kartoffelstärke | | Kornverteilung | | | |
|---|---|---|---|---|---|
| unbehandelt, nativ | | >100 µ | 0,5 % | <100 µ | 99,5 % |
| kationisiert bei | 20° C | >100 µ | 0,6 % | <100 µ | 99,4 % |
| (DS 0,040 ) | 40° C | >100 µ | 1,0 % | <100 µ | 99,0 % |
| | 50° C | >100 µ | 2,9 % | <100 µ | 97,1 % |
| | 80° C | >100 µ | 10,3 % | <100 µ | 89,7 % |

Beispiel 11

Erfindungsgemäß kann man eine Änderung der Viskosität von Stärkekleister bei konstantem Substitutionsgrad erzielen:
Kartoffelstärke (DS 0,026)

| Produkt aus Versuch | Aktivator | Viskosität 3 % Stärkekleister (20 °) |
|---|---|---|
| 3 | 1,0 % PC-3 | 1 800 mPas |
| 1 | 1,6 % PC-2 | 1 450 mPas |
| wie 1, aber mit | 2,1 % PC-4 | 600 mPas |
| 2 | 2,5 % PC-5 | 56 mPas |

Beispiel 12

Nach erfindungsgemäßen Verfahren kationisierte Stärken zeigen hervorragende Retentionswerte. Diese werden mit Hilfe des DDJ-Tests an Stoff-Suspensionen gemessen, die aus

3 g/l Zellstoff (50 % Buchensulfit-, 10 % Fichtensulfit-, 40 % Fichtensulfatzellstoff), 21 °SR und
2 g/l Füllstoff (China Clay) bestehen.

(D.W.Zunker, A.F. Breazeale, Tappi 66 (11), (1983) 37, K.W. Britt, J.E. Unbehend, Tappi 59 (2) (1976) 67, D. Abson, D.F. Brooks, Tappi 68 (I) (1985) 76

DDJ-Test (Dynamic Drainage Jar)

| Stärke-Type | Zusatz in % (bez. auf Feststoff) | Fein- und Füllstoff im Filtrat (g) | Retention in % |
|---|---|---|---|
| ohne Stärke | | 0,149 | 0 |
| native Kartoffelstärke | 0,2 | 0,145 | 3 |
| | 0,5 | 0,149 | 0 |
| Kationische Kartoffelstärke (DS 0,031) (Beispiel 8) | 0,2 | 0,026 | 83 |
| | 0,5 | 0,008 | 95 |
| Kationische Kartoffelstärke (DS 0,026) (Beispiel 1) | 0,2 | 0,054 | 64 |
| | 0,5 | 0,022 | 85 |
| | 1,0 | 0,004 | 97 |

Dieser Test zeigt eine gute Korrelation zu den Verhältnissen an der Papiermaschine

Beispiel 13

Durch den Zusatz von 0,5 Gew.-% 3-Chlor-2-hydroxpropyldimethyläthanolammoniumchlorid zum Kationisierungsreagenz 3-Chlor-2-hydroxipropyltrimethylammoniumchlorid bzw. 2,3-Epoxipropyltrimethylammoniumchlorid kann die Viskosität der Stärkekleister wesentlich erhöht werden, was bei der Anwendung in der Papierindustrie zu wesentlich besseren Retentionswerten und verbesserten Eigenschaften der Endprodukte führt.

| Kartoffelstärke DS 0,026<br>Reagenz | Viskosität (3 % Kleister) | |
|---|---|---|
| | 80° C | 20° C |
| 2,3-Epoxypropyltrimethylammonium-chlorid | 153 mPas | 918 mPas |
| + 0,5 % 3-Chlor-2-hydroxipropyl-äthanolammoniumchlorid | 284 mPas | 1450 mPas |

Die Kationisierung wird bei 20° C in Gegenwart von 1,6 Gew.-% Aktivator PC-2 durchgeführt.

<u>Beispiel 14</u> (Kartoffelstärke, theor. DS 0,049)

Durch Zusatz von Kieselsäure wird bei der Kationisierung eine höhere Reaktionsausbeute erhalten.

| | Ausbeute n. 6 Tagen bei 20 °C | Fließverhalten |
|---|---|---|
| ohne KS | 91,4 % | ungenügend (läuft nicht aus 18 mm Öffnung) |
| 0,50 % KS | 93,9 % | sehr gut (Auslauf aus 2,5 mm Öffnung) |

(Auslaufgläser: Innendurchmesser 90 mm, Höhe 42 mm)

KS: sprühgetrocknete Kieselsäure, 190 $m^2/g$

**Patentansprüche**

1. Verfahren zur Herstellung verätherter Stärken mit einem Substitutionsgrad (DS) von 0,005 bis 0,300 durch Umsetzung mit Alkylidenepoxiden der allgemeinen Formeln

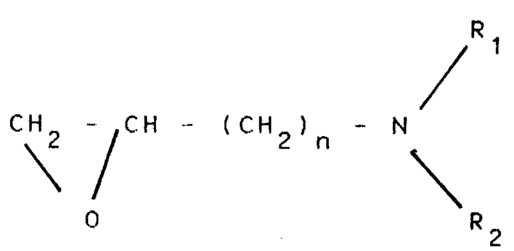

(I)

oder

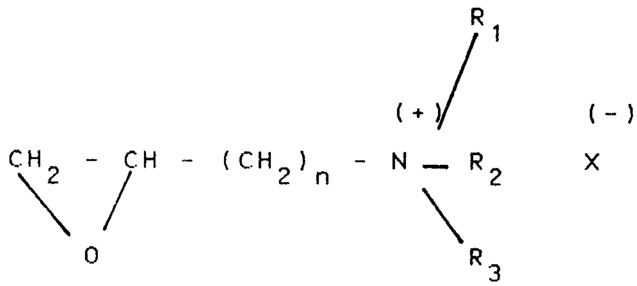 (II)

in denen n = 1, 2 oder 3 bedeutet, $R_2$ und $R_3$ gleiche oder verschiedene Alkylreste mit 1 bis 4 Kohlenstoffatomen, $R_1$ einen Alkylrest mit 1 bis 4 Kohlenstoffatomen oder den Benzylrest darstellen, und $X^{(-)}$ Chlorid, Bromid, Sulfat oder Acetat entspricht, in Gegenwart von 0,2 bis 2,0 Gew.-% eines Alkali- oder Erdalkalihydroxid oder Erdalkalioxids und 10 bis 35 Gew-% Wasser, (jeweils bezogen auf die Stärke (atro), wobei je Mol Stärke, berechnet als Anhydroglukoseeinheit in der Trockensubstanz, 0,005 bis 0,5 Mol der Epoxide gemäß den Formeln (I) oder (II) eingesetzt werden, dadurch gekennzeichnet, daß man die Umsetzung bei 5 bis 40 °C in Gegenwart eines pulverförmigen Gemischs, bestehend aus Kieselsäure und Calciumhydroxid oder -oxid (Aktivator) durchführt, das zu 10 bis 50 Gew.-% aus einer feinteiligen Kieselsäure besteht, deren spez. Oberfläche zwischen 60 und 700 $m^2/g$ liegt, wobei man den Aktivator der Stärke vor dem Epoxid zusetzt, in einer Menge, die so beschaffen ist, daß der pH-Wert der verätherten Stärke bei >9 (5 Gew.-% Suspension) liegt, und die Kieselsäure zu 0,02 bis 2,0 Gew.-% in dem Reaktionsgemisch vorhanden ist, bezogen auf dessen Gesamtmenge.

**2.** Verfahren gemäß Anspruch 1,
dadurch gekennzeichnet, daß man das Gemisch aus Stärke, Aktivator und Alkylidenepoxid in einem Intensivmischer innerhalb von 20 sec bis 25 min homogenisiert, dann ausschleust und in dem vorgesehenen Lagerbehältnis ausreagieren läßt.

**3.** Verfahren gemäß den Ansprüchen 1 und 2,
dadurch gekennzeichnet, daß man statt der Epoxide die zugehörigen Epichlorhydrine einsetzt.

**4.** Verfahren gemäß den Ansprüchen 1 bis 3,
dadurch gekennzeichnet, daß man die Verätherung in Gegenwart von zusätzlich 0,5 bis 5 Gew.-% einer Verbindung, bezogen auf die Epoxide mit den Formeln I oder II, umsetzt, die den folgenden Formeln entspricht

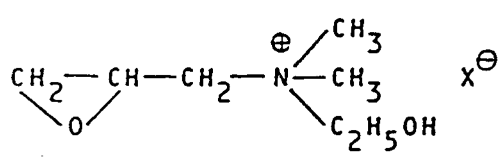 (III)

oder

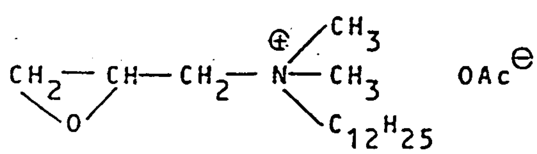 (IV)

oder

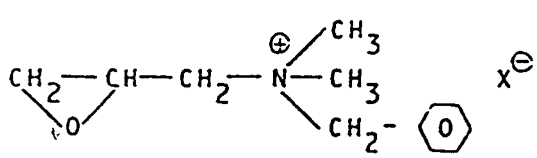 (V)

mit X : Chlorid, Bromid, Sulfat oder Acetat, Epoxide gemäß (V) jedoch nur, wenn nicht schon Epoxide gemäß (II) mit n = 1 und R = Benzyl eingesetzt werden.

5. Verfahren gemäß den Ansprüchen 1 bis 4,
dadurch gekennzeichnet, daß der Aktivator eine feinteilige hydrophile Kieselsäure enthält.

6. Verfahren gemäß den Ansprüchen 1 bis 4,
dadurch gekennzeichnet, daß der Aktivator eine hydrophobe Kieselsäure oder ein Gemisch aus einer hydrophoben und einer hydrophilen Kieselsäure enthält.

7. Verfahren gemäß den Ansprüchen 2 bis 6,
dadurch gekennzeichnet, daß man als Intensivmischer einen Pflugscharmischer benutzt.

8. Verfahren gemäß den Ansprüchen 2 bis 6,
dadurch gekennzeichnet, daß man als Intensivmischer einen Durchflußbefeuchtungsmischer benutzt.

9. Pulverförmiges Gemisch, bestehend aus 10 bis 50 Gew.-% einer hydrophilen Kieselsäure mit einer spezifischen Oberfläche von 190 bis 450 $m^2/g$ und 50 bis 90 Gew.-% Calciumhydroxid oder -oxid.

10. Pulverförmiges Gemisch, bestehend aus 10 bis 50 Gew.-% einer hydrophoben Kieselsäure (spez. Oberfläche zwischen 60 und 700 $m^2/g$) oder eines Gemisches aus hydrophilen (spez. Oberfläche 190 bis 450 $m^2/g$) und der hydrophoben Kieselsäure, 50 bis 90 Gew.-% Calciumhydroxid oder -oxid, wobei das Kieselsäuregemisch bis 20 % hydrophobe Kieselsäure enthält.

## Claims

1. A process for the production of etherified starches with a degree of substitution (DS) of 0.005 to 0.300 by reaction of alkylidene epoxides of the general formula

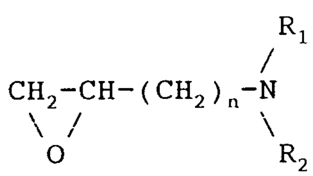

(I)

or

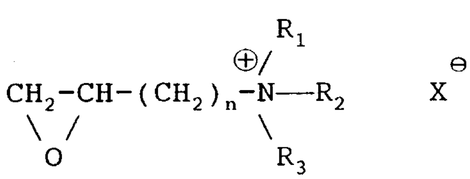

(II)

in which n = 1, 2 or 3, $R_2$ and $R_3$ represent identical or different alkyl groups with 1 to 4 carbon atoms, $R_1$ represents an alkyl group with 1 to 4 carbon atoms or the benzyl group, and $X^\ominus$ corresponds to chloride, bromide, sulphate or acetate, in presence of 0.2 to 2.0 wt% of an alkali metal hydroxide, alkaline earth metal hydroxide or alkaline earth metal oxide and 10 to 35 wt% water (in each case relative to the absolutely dry starch), wherein per mole starch, reckoned as an anhydroglucose unit in the dry substance, 0.005 to 0.5 mole of the epoxides according to the formulae (I) or (II) are used, characterized in that the reaction is carried out at 5 to 40 °C in presence of a powdery mixture consisting of silicic acid and calcium hydroxide or oxide (activator) that contains 10 to 50 wt% of a finely divided silicic acid whose specific surface area is between 60 and 700 $m^2/g$, wherein the activator is added to the starch before the epoxide in such a quantity that the pH value of the etherified starch exceeds 9 (5 wt% suspension), and 0.02 to 2.0 wt% silicic acid is present in the reaction mixture, relative to its total quantity.

2. A process according to Claim 1, characterized in that the mixture of starch, activator and alkylidene epoxide is homogenized in an intensive mixer for 20 sec to 25 min, then discharged and allowed to react to completion in the storage container provided.

3. A process according to Claims 1 and 2, characterized in that instead of the epoxides the corresponding epichlorhydrins are used.

4. A process according to Claims 1 to 3, characterized in that the etherification is carried out in the presence additionally of 0.5 to 5 wt%, relative to the epoxides with formulae I or II, of a compound corresponding to the following formulae:

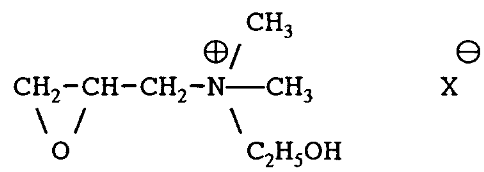

(III)

or

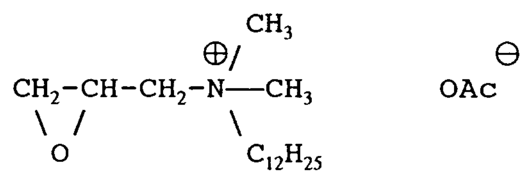

(IV)

or

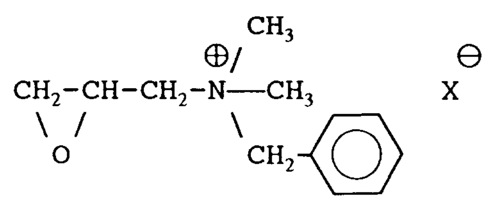

(V)

with X = chloride, bromide, sulphate or acetate. However, epoxides according to (V) are used only if epoxides according to (II) with n = 1 and R = benzyl are not already used.

5. A process according to Claims 1 to 4, characterized in that the activator contains a finely-divided hydrophilic silicic acid.

6. A process according to Claims 1 to 4, characterized in that the activator contains a hydrophobic silicic acid or a mixture of a hydrophobic and a hydrophilic silicic acid.

7. A process according to Claims 2 to 6, characterized in that a ploughshare mixer is used as an intensive mixer.

8. A process according to Claims 2 to 6, characterized in that a flow moistening mixer is used as an intensive mixer.

9. A powdery mixture, consisting of 10 to 50 wt% of a hydrophilic silicic acid with a specific surface area of 190 to 450 $m^2/g$ and 50 to 90 wt% of calcium hydroxide or oxide.

10. A powdery mixture, consisting of 10 to 50 wt% of a hydrophobic silicic acid (specific surface area between 60 and 700 $m^2/g$) or a mixture of hydrophilic (specific surface area 190 to 450 $m^2/g$) and the hydrophobic silicic acid and 50 to 90 wt% of calcium hydroxide or oxide, wherein the silicic acid mixture contains up to 20 % of hydrophobic silicic acid.

## Revendications

1. Procédé d'obtention d'amidons éthérifiés ayant un degré de substitution (DS) de 0,05 à 0,300 par réaction avec des époxydes d'alcoylidène de formules générales :

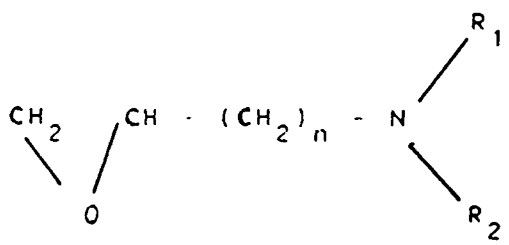

(I)

ou

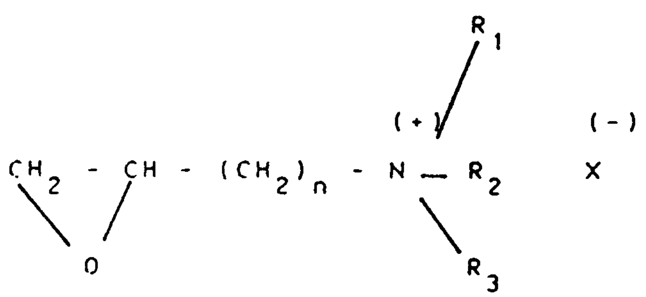

(II)

dans lesquelles n signifie 1,2 ou 3
$R_2$ et $R_3$ représentent des radicaux alcoyle identiques ou différents ayant de 1 à 4 atomes de carbone.
$R_1$ représente un radical alcoyle ayant de 1 à 4 atomes de carbone ou le radical benzyle
et $X^{(-)}$ correspond au chlorure, au bromure, au sulfate ou à l'acétate,
en présence de 0,2 à 2,0 % en poids d'un hydroxyde de métal alcalin ou alcalino-terreux ou d'un oxyde de métal alcalino-terreux et de 10 à 35 % en poids d'eau (rapporté respectivement à l'amidon (absolument sec) dans lequel par mol d'amidon calculé comme unité d'anhydroglucose dans la substance sèche, de 0,005 à 0,5 mol d'époxydes selon les formules (I) ou (II) sont mis en oeuvre, caractérisé en ce que l'on effectue la réaction de 5 à 40 °C en présence d'un mélange pulvérulent, formé d'acide silicique et d'hydroxyde de calcium ou d'oxyde de calcium (activateur) qui consiste pour 10 à 50 % en poids d'un acide silicique finement divisé dont la surface spécifique se situe entre 60 et 700 $m^2/g$, procédé dans lequel on met en jeu l'activateur de l'amidon avant l'époxyde en une quantité qui est constituée, de façon que la valeur du pH de l'amidon éthérifié se situe à >9 (suspension à 5 % en poids) et dans lequel l'acide silicique est présent dans le mélange réactionnel pour 0,02 à 2,0 % en poids, rapporté à la quantité totale de ce dernier.

2. Procédé selon la revendication 1, caractérisé en ce que le mélange à base d'amidon, d'activateur et d'époxyde d'alcoylène est homogénéisé dans un mélangeur intensif pendant 20 sec. à 25 minutes, puis évacué et laissé réagir dans le récpient de stockage prévu.

3. Procédé selon les revendications 1 et 2, caractérisé en ce que l'on met en oeuvre au lieu de l'époxyde, l'épichlorhydrine correspondante.

4. Procédé selon les revendications 1 à 3, caractérisé en ce que l'on fait réagir l'éthérification en présence de 0,5 à 5 % en poids en supplément d'un composé, rapporté à l'époxyde de formule I ou II,

qui correspond aux formules suivantes :

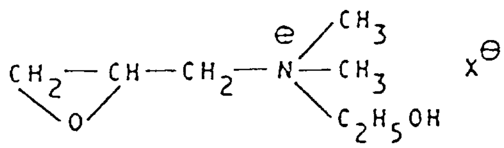 (III)

ou

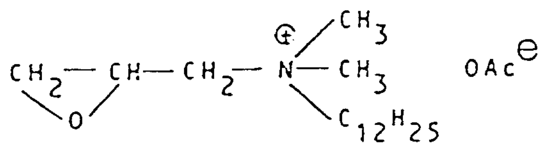 (IV)

ou

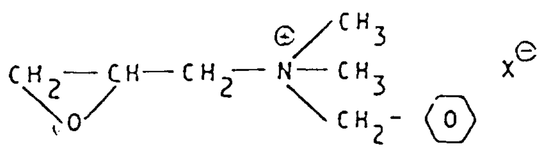 (V)

avec x : chlorure, bromure, sulfate ou acétate, les époxydes selon (V) sont mis en oeuvre seulement lorsque des époxydes selon (II) ne le sont pas déjà avec n = 1 et R = benzyle.

5. Procédé selon les revendications 1 à 4, caractérisé en ce que l'activateur renferme un acide silicique hydrophile finement divisé.

6. Procédé selon les revendications 1 à 4, caractérisé en ce que l'activateur renferme un acide silicique hydrophobe ou un mélange d'un acide silicique hydrophobe et d'un acide silicique hydrophile.

7. Procédé selon les revendication 2 à 6, caractérisé en ce que l'on utilise comme mélangeur intensif un mélangeur à soc de charrue.

8. Procédé selon les revendications 2 à 6, caractérisé en ce que l'on utilise comme mélangeur intensif un mélangeur d'humidification par traversée.

9. Mélange pulvérulent formé de 10 à 50 % en poids d'un acide silicique hydrophile ayant une surface spécifique de 190 à 450 $m^2/g$ et de 50 à 90 % en poids d'hydroxyde ou d'oxyde de calcium.

10. Mélange pulvérulent formé de 10 à 50 % en poids d'un acide silicique hydrophobe ayant une surface spécifique comprise entre 60 et 700 $m^2/g$ ou d'un mélange d'acide silicique hydrophile (surface spécifique 190 à 450 $m^2/g$) et hydrophobe de 50 à 90 % d'hydroxyde ou d'oxyde de calcium le mélange d'acides siliciques renfermant jusqu'à 20 % d'acide silicique hydrophobe.